# EUROPEAN PATENT SPECIFICATION

(11) **EP 2 275 203 B1**
(45) Date of publication and mention of the grant of the patent: **01.02.2017**
(21) Application number: 08873948.7
(22) Date of filing: 23.10.2008
(51) Int. Cl.: B01J 23/66, B01D 39/14, B01D 53/94, F01N 3/02, F01N 3/10, F01N 3/24, B01J 23/50

(54) **PARTICULATE COMBUSTION CATALYST, PARTICULATE FILTER AND EXHAUST GAS PURIFYING APPARATUS**
PARTIKELVERBRENNUNGSKATALYSATOR, PARTIKELFILTER UND ABGASREINIGUNGSVORRICHTUNG
CATALYSEUR DE COMBUSTION PARTICULAIRE, FILTRE PARTICULAIRE ET APPAREIL DE PURIFICATION DE GAZ D'ÉCHAPPEMENT

(30) Priority: 14.04.2008 JP 2008105156
(43) Date of publication of application: 19.01.2011
(73) Proprietor: Mitsui Mining and Smelting Co., Ltd., Shinagawa-ku Tokyo 141-8584 (JP)
(72) Inventor: ABE, Akira, Ageo-shi Saitama 362-0025 (JP); KAWANO, Junji, Ageo-shi Saitama 362-0025 (JP)
(74) Representative: Dossmann, Gérard
(86) International application number: PCT/JP2008/069242
(87) International publication number: WO 2009/128175

(56) References cited:
- EP-A1- 1 364 699
- JP-A- 9 075 739
- JP-A- 9 085 053
- JP-A- 9 088 727
- JP-A- 10 151 348
- JP-A- 11 005 035
- JP-A- 2003 334 443
- US-A- 5 593 933
- US-A1- 2005 282 698
- US-A1- 2006 228 283
- US-A1- 2006 248 874
- US-B2- 6 921 738
- W. ADDY MAJEWSKI: "NOx ADSORBERS", , 31 October 2007 (2007-10-31), XP000002657793, Retrieved from the Internet: URL:http:///www.dieselnet.com/tech/cat_nox -trap.html [retrieved on 2011-08-26]

## Description

### Technical Field

The present invention relates to a particulate combustion catalyst, to a particulate filter, and to an exhaust gas cleaning apparatus. More particularly, the present invention relates to a particulate combustion catalyst which realizes removal (through oxidation) of particulate matter discharged from a diesel internal combustion engine; to a particulate filter coated with the particulate combustion catalyst; and to an exhaust gas cleaning apparatus including the particulate filter coated with the particulate combustion catalyst.

### Background Art

Exhaust gas discharged from diesel engines contains nitrogen oxides (NOₓ) and particulate matter, and release of such substances into the atmosphere without any treatment is a main cause of air pollution. Therefore, demand has arisen for strict regulation for such substances. There has been proposed, as effective means for removing particulate matter, a flow-through oxidation catalyst for combustion of soluble organic fractions (SOFs), and a diesel exhaust gas trapping system employing a diesel particulate filter for trapping soot. However, for regeneration of such a particulate filter, particulate matter trapped therein must be continuously removed through oxidation.

Hitherto, a variety of continuous regeneration systems have been proposed, and examples thereof include a system employing a catalyst including a carrier made of an inorganic oxide (e.g., zirconium oxide, vanadium oxide, or cerium oxide), and an expensive noble metal (e.g., Pt) supported on the carrier (see, for example, Patent Document 1, 2, or 3); and a continuous regeneration method involving NO₂ (see, for example, Patent Document 4). This continuous regeneration method requires provision, upstream of a particulate filter, of an oxidation catalyst (e.g., Pt) for oxidizing NO into NO₂, and thus involves high cost. In addition, reaction involving NO₂ is affected by the ratio of NOₓ to C, and many restrictions are imposed on the employment of this method.

Patent Document 1: Japanese Patent Application Laid-Open (*kokai*) No. H10-047035
Patent Document 2: Japanese Patent Application Laid-Open (*kokai*) No. 2003-334443
Patent Document 3: Japanese Patent Application Laid-Open (*kokai*) No. 2004-058013
Patent Document 4: Japanese Patent No. 3012249
US-A-2006/0228283 and EP-A-1 364 699 disclose catalysts for reducing NOₓ in exhaust gases.

### Disclosure of the Invention

### Problems to be Solved by the Invention

An object of the present invention is to provide a particulate combustion catalyst which exhibits excellent heat resistance, which realizes removal of soot through oxidation at low temperature without employment of an expensive noble metal, and which enables oxidation reaction to proceed with the aid of only oxygen and thus realizes removal of soot through oxidation at low temperature regardless of the NOₓ concentration of exhaust gas. Another object of the present invention is to provide a particulate filter coated with the particulate combustion catalyst. Yet another object of the present invention is to provide an exhaust gas cleaning apparatus comprising the particulate filter coated with the particulate combustion catalyst.

### Means for Solving the Problems

In order to achieve the aforementioned objects, the present inventors have conducted extensive studies, and as a result have found that the objects can be achieved by employing, as a carrier of a particulate combustion catalyst, a specific oxide or a composite oxide having a specific composition; supporting, on the carrier, an oxide of at least one metal selected from the group consisting of Ba, Ca, Mg, and Sr; and supporting, on the carrier, metallic Ag or Ag oxide, which serves as a catalyst component. The present invention has been accomplished on the basis of this finding

Accordingly, the present invention provides a particulate combustion catalyst as disclosed in the wording of the independent claim 1 characterized by comprising:
- a carrier consisting of a composite oxide containing zirconium oxide, cerium oxide and at least one metal oxide selected from among Nd oxide and La oxide;
- at least one metal oxide selected from the group consisting of Ba oxide, Ca oxide, Mg oxide and Sr oxide, the metal oxide being supported on the carrier in an amount, as reduced to metal, of 0.5 to 30 mass% with respect to the carrier; and - metallic Ag or Ag oxide, which serves as a catalyst component and is supported on the carrier, in an amount, as reduced to metal, of 0.1 to 25 mas% on the basis of the total mass of the carrier and at least one metal oxide selected from the group consisting of Ba oxide, Ca oxide, Mg oxide and Sr oxide.

Other embodiments of the particulate combustion catalyst are disclosed in the wordings of dependent claims 2-5.

The present invention also provides a particulate filter as disclosed in present claim 6 characterized by being coated with a particulate combustion catalyst as disclosed in any of claims 1 to 5 and respectively an exhaust gas cleaning apparatus as disclosed in present claim 7 characterized by comprising a particulate filter coated with a particulate combustion catalyst of claims 1 to 5.

The particulate combustion catalyst of the present invention exhibits excellent heat resistance. Employment of the particulate combustion catalyst of the present invention realizes removal of soot through oxidation at low temperature without use of an expensive noble metal. When the particulate combustion catalyst is employed, since oxidation reaction proceeds with the aid of only oxygen, soot can be removed through oxidation at low temperature regardless of the NOₓ concentration of exhaust gas. Even when a catalyst system including the particulate combustion catalyst is exposed to a high-temperature atmosphere for a long period of time, degradation of the system can be suppressed.

### Best Modes for Carrying Out the Invention

When the particulate combustion catalyst of the present invention employs, as a carrier, a zirconium-cerium composite oxide, the cerium oxide content of the composite oxide is preferably 5 to 50 mass%. When the cerium oxide content exceeds 50 mass%, the specific surface area of the carrier is reduced at a high temperature (e.g., 700°C or higher), which may eventually cause thermal degradation of the catalyst. In addition, when the cerium oxide content exceeds 50 mass%, an active species may fail to sufficiently exert its performance. In contrast, when the cerium oxide content is less than 5 mass%, the carrier exhibits poor heat resistance, which may eventually cause thermal degradation of the catalyst.

When the particulate combustion catalyst of the present invention employs, as a carrier, a composite oxide selected among Nd oxide and La oxide the carrier exhibits improved thermal stability, and oxidation property at low temperature is improved. In order to attain such effects, the amount of an oxide of at least one metal selected from among Nd, La, is preferably 1 mass% or more. However, when the amount of such a metal oxide exceeds 35 mass%, accordingly, the relative amounts of zirconium oxide and cerium oxide are reduced, and characteristics of the carrier containing the zirconium-cerium composite oxide tend to be deteriorated. Therefore, in the composite oxide contained in the carrier employed, preferably, the amount of an oxide of at least one metal selected from among Nd, La, is 1 to 35 mass% (i.e., when two or more metal oxides are employed, the total amount of the oxides is 1 to 35 mass%), and the cerium oxide content is 5 to 50 mass% (zirconium oxide content: balance).

In the present invention, an oxide of at least one metal selected from the group consisting of Ba, Ca, Mg, and Sr must be supported on any of the aforementioned carriers. A conventionally known technique (e.g., the impregnation method or the sol-gel method) may be employed for supporting such a metal oxide on the carrier. In the present invention, when an oxide of at least one metal selected from the group consisting of Ba, Ca, Mg, and Sr is supported on the carrier, the resultant particulate combustion catalyst exhibits improved heat resistance. In order to attain such effects, the amount (as reduced to metal) of an oxide of at least one metal selected from among Ba, Ca, Mg, and Sr is 0.5 mass% or more with respect to the carrier. However, when the amount (as reduced to metal) of such a metal oxide exceeds 30 mass% with respect to the carrier, accordingly, the relative amounts of zirconium oxide and cerium oxide are reduced, and characteristics of the carrier containing the zirconium-cerium composite oxide tend to be deteriorated. Therefore, preferably, the amount (as recued to metal) of an oxide of at least one metal selected from among Ba, Ca, Mg, and Sr is 0.5 to 30 mass% (i.e., when two or more metal oxides are employed, the total amount (as recued to metal) of the oxides is 0.5 to 30 mass%) with respect to the carrier (i.e., 0.5 to 30 parts by mass on the basis of 100 parts by mass of the carrier).

In the present invention, metallic Ag or Ag oxide must be supported, as a catalyst component, on the carrier. A conventionally known technique (e.g., the impregnation method or the sol-gel method) may be employed for supporting such a catalyst component on the carrier. Metallic Ag or Ag oxide, which is employed in the present invention, is less expensive than, for example, Pt or Pd. In addition, when metallic Ag or Ag oxide is employed in combination with a specific carrier used in the present invention, further excellent effects are obtained, as compared with the case where a Pt or Pd component is employed. In the present the amount (as reduced to mental) of metallic Ag or Ag oxide supported on the carrier is 0.1 to 25 mass% on the basis of the total mass of the carrier and an oxide of at least one metal selected from the group consisting of Ba, Ca, Mg, and Sr. When the amount of the catalyst component is less than 0.1 mass%, the catalyst component may fail to sufficiently exhibit its catalytic effects, whereas when the amount of the catalyst component exceeds 25 mass%, a specific combination employed in the present invention may fail to sufficiently exhibit a synergistic effect. Meanwhile, when the amount of the catalyst component is large, sintering of metal is likely to occur, and the catalyst component is not expected to exhibit its catalytic effects,

In consideration that the particulate filter of the present invention is produced by causing the particulate combustion catalyst of the present invention to be held on a base, preferably, the surface of the carrier is provided with a binder component such as SiO₂, TiO₂, ZrO₂, or Al₂O₃. When such a binder component is provided on the surface of the carrier, adhesion between the base and the carrier is enhanced, and the catalyst exhibits improved durability and heat resistance.

The particulate filter of the present invention may assume any known form of particulate filter, but preferably has a three-dimensional structure. Specific examples of filters having a three-dimensional structure include a wall-through filter, a flow-through honeycomb filter, a wire mesh filter, a ceramic fiber filter, a metallic porous filter, a particle-charged filter, and a foam filter. Examples of the material of the base include ceramic materials such as cordierite and SiC; Fe-Cr-Al alloys; and stainless steel alloys.

The exhaust gas cleaning apparatus of the present invention, which includes therein the aforementioned particulate filter of the present invention, will be readily appreciated by those skilled in the art.

Next will be described a method for producing the particulate filter of the present invention.

Any of the aforementioned types of carriers is mixed with a binder component (e.g., SiO₂ or alumina sol) and water, and the resultant mixture is finely milled by means of a milling apparatus (e.g., a ball mill). A particulate filter (e.g., a wire mesh filter) is coated with the thus-obtained slurry. In general, the slurry-coated filter is fired at a temperature of about 500°C to about 700°C. The thus-formed wash-coating layer is impregnated with, for example, a nitrate of at least one metal selected from the group consisting of Ba, Ca, Mg, and Sr, and then drying and firing are carried out. Subsequently, the resultant product is impregnated with, for example, silver nitrate serving as a catalyst component, and then drying and firing are carried out. Alternatively, the wash-coating layer may be impregnated with, for example, a nitrate of at least one metal selected from the group consisting of Ba, Ca, Mg, and Sr, together with, for example, silver nitrate, followed by drying and firing. The total catalyst coating amount is preferably 10 to 100 g/L (for a wall-flow particulate filter) or about 50 to about 150 g/L (for a wire mesh particulate filter). When the total catalyst coating amount is excessively small, sufficient performance fails to be attained, whereas when the total catalyst coating amount is excessively large, back pressure to exhaust gas increases. Examples

The present invention will next be described in detail with reference to Examples and Comparative Examples. In each of the Examples and Comparative Examples, a parenthesized numerical value following each of the oxides constituting a composite oxide represents the amount (mass%) of the constitutive oxide.

### Example 1

Water (30 g) was added to powder of a composite oxide of CeO₂(22)ZrO₂(72)La₂O₃(2)Nd₂O₃(4) (20 g), and SiO₂ sol (i.e., a binder component) (5 g, as reduced to SiO₂) was added thereto, followed by mixing for two hours, to thereby prepare a slurry. By use of the slurry, a cordierite-made particulate filter (25.4 mm in diameter x 60 mm in length) was coated with the composite oxide. The composite-oxide-coated filter was dried at 120°C for three hours, and then fired in air at 500°C for one hour. The composite-oxide-coated filter was found to have a composite oxide content of 40 g/L. The composite-oxide-coated filter was impregnated with an aqueous magnesium nitrate solution having a specific concentration and an aqueous silver nitrate solution having a specific concentration. The resultant product was dried at 120°C for three hours, and then finally fired in air at 500°C for one hour. The finally formed filter was found to have an Ag content of 5 g/L and an Mg content of 1 g/L. The Ag content as determined on the basis of the total mass of the aforementioned composite oxide and magnesium oxide was 12 mass%, and the Mg content as determined on the basis of the mass of the aforementioned composite oxide was 2.5 mass%.

### Example 2

The procedure of Example 1 was repeated, except that the aqueous magnesium nitrate solution was replaced with an aqueous calcium nitrate solution. The finally formed filter was found to have an Ag content of 5 g/L and a Ca content of 1 g/L. The Ag content as determined on the basis of the total mass of the aforementioned composite oxide and calcium oxide was 12.1 mass%, and the Ca content as determined on the basis of the mass of the aforementioned composite oxide was 2.5 mass%.

### Example 3

The procedure of Example 1 was repeated, except that the aqueous magnesium nitrate solution was replaced with an aqueous barium nitrate solution. The finally formed filter was found to have an Ag content of 5 g/L and a Ba content of 1 g/L. The Ag content as determined on the basis of the total mass of the aforementioned composite oxide and barium oxide was 12.2 mass%, and the Ba content as determined on the basis of the mass of the aforementioned composite oxide was 2.5 mass%.

### Example 4

The procedure of Example 1 was repeated, except that the aqueous magnesium nitrate solution was replaced with an aqueous strontium nitrate solution. The finally formed filter was found to have an Ag content of 5 g/L and an Sr content of 1 g/L. The Ag content as determined on the basis of the total mass of the aforementioned composite oxide and strontium oxide was 12.1 mass%, and the Sr content as determined on the basis of the mass of the aforementioned composite oxide was 2.5 mass%.

### Example 5

The procedure of Example 1 was repeated, except that the composite oxide of CeO₂(22)ZrO₂(72)La₂O₃(2)Nd₂O₃(4) was replaced with ZrO₂, and the aqueous magnesium nitrate solution was replaced with an aqueous barium nitrate solution. The finally formed filter was found to have an Ag content of 5 g/L and a Ba content of 1 g/L. The Ag content as determined on the basis of the total mass of ZrO₂ and barium oxide was 12.2 mass%, and the Ba content as determined on the basis of the mass of ZrO₂ was 2.5 mass%.

### Example 6

The procedure of Example 1 was repeated, except that the composite oxide of CeO₂(22)ZrO₂(72)La₂O₃(2)Nd₂O₃(4) was replaced with a composite oxide of CeO₂(30)ZrO₂(70), and the aqueous magnesium nitrate solution was replaced with an aqueous barium nitrate solution. The finally formed filter was found to have an Ag content of 5 g/L and a Ba content of 1 g/L. The Ag content as determined on the basis of the total mass of the aforementioned composite oxide and magnesium oxide was 12.2 mass%, and the Ba content as determined on the basis of the mass of the aforementioned composite oxide was 2.5 mass%.

### Example 7

Water (700 g) was added to powder of a composite oxide of CeO2 (22) ZrO₂ (72) La₂O₃ (2) Nd₂O₃ (4) (100 g), and the resultant mixture was milled by means of a ball mill so as to attain a mean particle size of 1 µm or less. Subsequently, ZrO₂ sol (i.e., a binder component) (10 g, as reduced to ZrO₂) was added to the mixture, followed by mixing for two hours, to thereby prepare a slurry. By use of the slurry, a cordierite-made particulate filter (25.4 mm in diameter x 76.2 mm in length) was coated with the composite oxide. The composite-oxide-coated filter was dried at 120°C for three hours, and then fired in air at 500°C for one hour. The composite-oxide-coated filter was found to have a composite oxide content of 40 g/L. The composite-oxide-coated filter was impregnated with an aqueous barium nitrate solution having a specific concentration and an aqueous silver nitrate solution having a specific concentration. The resultant product was dried at 120°C for three hours, and then finally fired in air at 500°C for one hour. The finally formed filter was found to have an Ag content of 2 g/L and a Ba content of 2 g/L. The Ag content as determined on the basis of the total mass of the aforementioned composite oxide and magnesium oxide was 4.7 mass%, and the Mg content as determined on the basis of the mass of the aforementioned composite oxide was 5 mass%.

### Comparative Example 1

The procedure of Example 1 was repeated, except that the aqueous magnesium nitrate solution was not employed. The finally formed filter was found to have an Ag content of 5 g/L, and the Ag content as determined on the basis of the mass of the composite oxide was 12.5 mass%.

### Comparative Example 2

The procedure of Example 7 was repeated, except that the aqueous barium nitrate solution was not employed. The finally formed filter was found to have an Ag content of 2 g/L, and the Ag content as determined on the basis of the mass of the composite oxide was 5 mass%.

### <Evaluation of catalyst-coated particulate filter in terms of soot combustion by use of simulated exhaust gas>

The Tig (combustion initiation temperature) of soot corresponding to each of the catalyst-coated particulate filters produced in Examples 1 to 6 and Comparative Example 1 was measured through the following method.

A specific amount of a dispersion prepared by dispersing carbon (Printex-V (toner carbon), product of Degussa) (20 mg) in ethyl alcohol was added dropwise to each of the catalyst-coated particulate filters produced in Examples 1 to 6 and Comparative Example 1 (25.4 mm in diameter × 60 mm in length) from above the filter, followed by drying at 100°C for 10 minutes. Thus, carbon (20 mg) was deposited on one catalyst-coated particulate filter. The carbon-deposited filter was fixed at a center portion of a quartz-made simulated exhaust gas reaction tube. While a circulation gas having the below-described composition was caused to flow through the quartz reaction tube at the below-described flow rate, the temperature of the reaction tube was elevated at the below-described temperature elevation rate by means of an electric furnace, and CO and CO₂ concentrations were measured at the outlet of the reaction tube by means of an infrared analyzer. The temperature as measured at the inlet of the catalyst-containing reaction tube when CO₂ concentration reached 400 ppm (i.e., electric furnace control temperature) was regarded as Tig.
Gas composition: O₂: 10%, H₂O: 10%, N₂: balance
Flow rate: 25 L/min
Temperature elevation rate: 10 degrees (°C)/min

Table 1 shows the thus-measured Tig corresponding to the respective catalyst-coated particulate filters produced in Examples 1 to 6 and Comparative Example 1, as well as the compositions of the catalysts.

[Table 1]

**Table 1**

| | Composition of catalyst | Tig |
|---|---|---|
| Example 1 | Ag + Mg/CeO₂(22)ZrO₂(72)La₂O₃(2)Nd₂O₃(4) | 403°C |
| Example 2 | Ag + Ca/CeO₂(22)ZrO₂(72)La₂O₃(2)Nd₂O₃(4) | 409°C |
| Example 3 | Ag + Ba/CeO₂(22)ZrO₂(72)La₂O₃(2)Nd₂O₃(4) | 405°C |
| Example 4 | Ag + Sr/CeO₂(22)ZrO₂(72)La₂O₃(2)Nd₂O₃(4) | 417°C |
| Example 5 | Ag + Ba/ZrO₂ | 415°C |
| Example 6 | Ag + Ba/CeO₂(30)ZrO₂(70) | 407°C |
| Comparative Example 1 | Ag/CeO₂ (22) ZrO₂ (72) La₂O₃ (2)Nd₂O₃ (4) | 452°C |

### <Evaluation of heat resistance of catalyst-coated particulate filter>

For evaluation of heat resistance of a catalyst-coated particulate filter, the balance point temperature of the filter was measured by use of actual exhaust gas. Each of the catalyst-coated particulate filters produced in Example 7 and Comparative Example 2, or each of the catalyst-coated particulate filters produced in Example 7 and Comparative Example 2 and then subjected to thermal treatment at 700°C or 800°C for 20 hours was placed in a stainless steel holder, and the holder was fixed in a quartz reaction tube. While a portion of exhaust gas discharged from a diesel generator engine (engine displacement: 0.2 L) (rotation speed: 3,000 rpm) was distributed to the quartz reaction tube at a flow rate of 30.8 L/min, the quartz reaction tube was heated from outside by means an electric furnace. After the temperature had reached 300°C, the quartz reaction tube was heated in a stepwise manner at 20 degrees (°C)/10 min. The difference in pressure between the inlet and the outlet of the reaction tube containing the particulate filter was measured, and the temperature at which the pressure difference is zero was determined. The thus-determined temperature was regarded as balance point temperature. Table 2 shows the balance point temperatures of the respective catalyst-coated particulate filters. As is clear from data shown in Table 2, the catalyst-coated particulate filter of Example 7 (i.e., the particulate filter of the present invention) exhibits excellent heat resistance (i.e., an increase in balance point temperature is suppressed even after thermal treatment at a high temperature), as compared with the case of the catalyst-coated particulate filter of Comparative Example 2.

[Table 2]

**Table 2**

| Thermal treatment temperature, time | Type of catalyst-coated particulate filter | Balance point temperature |
|---|---|---|
| None | Example 7 | 454°C |
| | Comparative Example 2 | 454°C |
| 700°C, 20 hours | Example 7 | 455°C |
| | Comparative Example 2 | 488°C |
| 800°C, 20 hours | Example 7 | 476°C |
| | Comparative Example 2 | 502°C |

## Claims

1. A particulate combustion catalyst comprising:
- a carrier consisting of a composite oxide containing zirconium oxide, cerium oxide, and at least one metal oxide selected from among Nd oxide and La oxide;
- at least one metal oxide selected from the group consisting of Ba oxide, Ca oxide, Mg oxide, and Sr oxide, the metal oxide being supported on the carrier in an amount, as reduced to metal, of 0.5 to 30 mass% with respect to the carrier; and
- metallic Ag or Ag oxide, which serves as a catalyst component and is supported on the carrier, in an amount, as reduced to metal, of 0.1 to 25 mass% on the basis of the total mass of the carrier and at least one metal oxide selected from the group consisting of Ba oxide, Ca oxide, Mg oxide, and Sr oxide.

2. A particulate combustion catalyst according to claim 1, wherein the surface of the carrier is provided with SiO₂, TiO₂, ZrO₂, or Al₂O₃, which serves as a binder component.

3. A particulate combustion catalyst according to claim 2, wherein at least one metal oxide selected from the group consisting of Ba oxide, Ca oxide and Mg oxide, is supported on the carrier.

4. A particulate combustion catalyst according to claim 2 and 3, wherein the carrier consists of a composite oxide containing zirconium oxide, cerium oxide, Nd oxide and La oxide, and the total amount of Nd oxide and La oxide is 1 to 35 mass %.

5. A particulate combustion catalyst according to claim 4, wherein the carrier consists of a composite oxide containing zirconium oxide, cerium oxide, Nd oxide and La oxide, and the amount of cerium oxide is 5 to 50 mass %.

6. A particulate filter **characterized by** being coated with a particulate combustion catalyst as recited in any of claims 1 to 5.

7. An exhaust gas cleaning apparatus **characterized by** comprising a particulate filter coated with a particulate combustion catalyst as recited in any of claims 1 to 5.

## Patentansprüche

1. Partikulärer Verbrennungskatalysator, umfassend:
- einen aus einem Kompositoxid bestehenden Träger, der Zirkonoxid, Ceroxid und mindestens ein aus Neodymoxid und Lanthanoxid ausgewähltes Metalloxid enthält;
- mindestens ein Metalloxid, das aus der aus Bariumoxid, Calciumoxid, Magnesiumoxid und Strontiumoxid bestehenden Gruppe ausgewählt ist, wobei das Metalloxid in einer auf Metall reduzierten Menge von 0,5 bis 30 Masse-% bezogen auf den Träger auf dem Träger getragen wird; und
- metallisches Silber oder Silberoxid, das als Katalysatorkomponente dient und in einer auf Metall reduzierten Menge von 0,1 bis 25 Masse-% bezogen auf die Gesamtmasse des Trägers auf dem Träger getragen wird, und mindestens ein Metalloxid, das aus der aus Bariumoxid, Calciumoxid, Magnesiumoxid und Strontiumoxid bestehenden Gruppe ausgewählt ist.

2. Partikulärer Verbrennungskatalysator nach Anspruch 1, wobei die Oberfläche des Trägers mit SiO₂, TiO₂, ZrO₂ oder Al₂O₃ versehen ist, das als Bindemittelkomponente dient.

3. Partikulärer Verbrennungskatalysator nach Anspruch 2, wobei mindestens ein Metalloxid, das aus der aus Bariumoxid, Calciumoxid und Magnesiumoxid bestehenden Gruppe ausgewählt ist, auf dem Träger getragen wird.

4. Partikulärer Verbrennungskatalysator nach Anspruch 2 und 3, wobei der Träger aus einem Kompositoxid besteht, das Zirconoxid, Ceroxid, Neodymoxid und Lanthanoxid enthält, und die Gesamtmenge von Neodymoxid und Lanthanoxid 1 bis 35 Masse-% beträgt.

5. Partikulärer Verbrennungskatalysator nach Anspruch 4, wobei der Träger aus einem Kompositoxid besteht, das Zirconoxid, Ceroxid, Neodymoxid und Lanthanoxid enthält, und die Menge an Ceroxid 5 bis 50 Masse-% beträgt.

6. Partikelfilter, **dadurch gekennzeichnet, dass** er mit einem partikulären Verbrennungskatalysator nach einem der Ansprüche 1 bis 5 beschichtet ist.

7. Abgasreinigungsvorrichtung, **dadurch gekennzeichnet, dass** sie einen Partikelfilter umfasst, der mit einem partikulären Verbrennungskatalysator nach einem der Ansprüche 1 bis 5 beschichtet ist.

## Revendications

1. Catalyseur de combustion de particules, comprenant :
- un support constitué d'un oxyde composite contenant de l'oxyde de zirconium, de l'oxyde de cérium, et au moins un oxyde de métal choisi parmi de l'oxyde de néodyme et de l'oxyde de lanthane ;
- au moins un oxyde de métal choisi dans l'ensemble formé par de l'oxyde de baryum, de l'oxyde de calcium, de l'oxyde de magnésium et de l'oxyde de strontium, lequel oxyde de métal est supporté sur le support en une proportion, réduite au métal, de 0,5 à 30 % en masse par rapport au support ;
- et de l'argent à l'état métallique ou de l'oxyde d'argent, qui sert de composant catalyseur et qui est supporté sur le support en une proportion, réduite au métal, de 0,1 à 25 %, en masse rapportée à la masse totale du support et de l'oxyde de métal au nombre d'au moins un, choisi dans l'ensemble formé par de l'oxyde de baryum, de l'oxyde de calcium, de l'oxyde de magnésium et de l'oxyde de strontium.

2. Catalyseur de combustion de particules, conforme à la revendication 1, dans lequel la surface du support est munie de silice SiO₂, d'oxyde de titane TiO₂, de zircone ZrO₂ ou d'alumine Al₂O₃, qui sert de composant liant.

3. Catalyseur de combustion de particules, conforme à la revendication 2, dans lequel il y a au moins un oxyde de métal, choisi dans l'ensemble formé par de l'oxyde de baryum, de l'oxyde de calcium et de l'oxyde de magnésium, supporté sur le support.

4. Catalyseur de combustion de particules, conforme à la revendication 2 ou 3, dans lequel le support est constitué d'un oxyde composite contenant de l'oxyde de zirconium, de l'oxyde de cérium, de l'oxyde de néodyme et de l'oxyde de lanthane, et la proportion totale d'oxyde de néodyme et d'oxyde de lanthane vaut de 1 à 35 % en masse.

5. Catalyseur de combustion de particules, conforme à la revendication 4, dans lequel le support est constitué d'un oxyde composite contenant de l'oxyde de zirconium, de l'oxyde de cérium, de l'oxyde de néodyme et de l'oxyde de lanthane, et la proportion d'oxyde de cérium vaut de 5 à 50 % en masse.

6. Filtre à particules, **caractérisé en ce qu'**il est revêtu d'un catalyseur de combustion de particules conforme à l'une des revendications 1 à 5.

7. Dispositif de purification de gaz d'échappement, **caractérisé en ce qu'**il comporte un filtre à particules revêtu d'un catalyseur de combustion de particules conforme à l'une des revendications 1 à 5.
